# EUROPÄISCHE PATENTSCHRIFT

(11) **EP 0 769 681 B1**
(45) Veröffentlichungstag und Bekanntmachung des Hinweises auf die Patenterteilung: **02.09.1998**
(21) Anmeldenummer: 96116454.8
(22) Anmeldetag: 15.10.1996
(51) Int. Cl.: G01F 1/06

(54) **Wassermengenzähler**
Water meter
Compteur d'eau

(30) Priorität: 20.10.1995 DE 19539080; 21.11.1995 DE 19543361
(43) Veröffentlichungstag der Anmeldung: 23.04.1997
(73) Patentinhaber: Wasser + Wärme Messtechnik Werl GmbH & Co. KG, 59457 Werl (DE)
(72) Erfinder: Wrede, Franz Josef, Dr., 9055 Bühler (CH)
(74) Vertreter: Hassler, Werner, Dr.

(56) Entgegenhaltungen:
- WO-A-88/02545
- WO-A-96/23203
- DE-A- 2 715 239
- DE-A- 3 608 807
- R.E. WHELAN: "A MINIATURE LOW-FLOW-RATE TURBINE FLOWMETER FOR HIGH PRESSURE." JOURNAL OF PHYSICS E. SCIENTIFIC INSTRUMENTS., Bd. 12, Nr. 6, Juni 1979, BRISTOL GB, Seiten 553-556, XP002042496
- "FLUID-FLOW METER" RESEARCH DISCLOSURE, Nr. 385, Mai 1996, Seite 306 XP000599730

## Beschreibung

Die Erfindung betrifft einen Wassermengenzähler mit einem in einer Druckkammer drehbar gelagerten Flügelrad, mit einer Abtastvorrichtung für das Flügelrad, das mindestens einen Reflexionsbelag aufweist, und mit einer auf die Bahn des Reflexionsbelages ausgerichteten Reflexionslichtschranke.

Ein Anwendungsgebiet der Erfindung ist die Erfassung des Wärmeverbrauchs in Wohnungen, deren Wärmeenergie durch Wasser zugeführt wird. Zur Energieerfassung muß neben der Vorlauftemperatur und der Rücklauftemperatur das Wasservolumen gemessen werden. Die Temperaturmessung ist sehr genau, jedoch werden bei der Messung des Wasservolumens Verbesserungen erstrebt, um die Gesamtgenauigkeit der Messung zu erhöhen.

Ein Wassermengenzähler nimmt in einem druckfesten Gehäuse ein Flügelrad auf, das von dem durchströmenden Wasser in Bewegung gesetzt wird. Der Wasserdruck einer Heizungsanlage kann bis über 1,5 MPa betragen. Eine direkte Durchführung der Welle des Flügelrades in den druckfreien Außenraum ist wegen des hohen Innendrucks und der verhältnismäßig hohen Reibung in der Durchführung schwierig.

Eine Übertragung der Drehbewegung in den druckfreien Außenraum ist durch magnetische Kopplung, durch induktive Abtastung oder durch Leitwerterfassung möglich.

Die DE 3608807 Al beschreibt eine induktive Abtastung. Diese ist störanfällig und wegen der Forderung nach elektromagnetischer Verträglichkeit kritisch.

Eine Leitwerterfassung scheidet infolge der großen Änderung des Leitwertes in Heizungswasser (pH-Werte zwischen 5 und 11 sind zulässig) aus.

Das DE 8909930 U1 beschreibt einen Durchflußmesser mit Taktgeberelementen auf dem Rotor und mit einem Sensor in der Wandung des Geräts. Eine Anpassung an verschmutztes Heizungswasser und an einen geringen Energieverbrauch ist dieser Druckschrift nicht entnehmbar.

Die GB 2049925 A beschreibt einen Durchflußmesser der gattungsgemäßen Art. Dort ist die Reflexionslichtschranke in den Druckraum eingebaut. Eine derartige Anordnung ist bei geringem Druck des zu messenden Mediums anwendbar. Bei der Erfassung von Heizungswasser scheidet eine solche Anordnung infolge der hohen Drücke bis zu 1,5 MPa aus. Eine ähnliche Vorrichtung ist in der EP 0163785 B1, in der JP 07055515 A und in der US 4851666 beschrieben.

Für eine magnetische Kopplung ist an dem Flügelrad ein Magnet erforderlich, der Magnetitablagerungen aufnehmen kann, die den Spalt zu der Gehäusewand zusetzen.

Aufgabe der Erfindung ist die Ausbildung einer bei minimalem Energieverbrauch und auch bei verschmutztem Wasser sowie bei hohem Druck des zu erfassenden Mediums zuverlässig arbeitenden Abtastung des Flügelrades.

Diese Aufgabe wird nach der Erfindung dadurch gelöst, daß Lichtleiter der Reflexionslichtschranke druckdicht durch die Wandung der Druckkammer hindurchgeführt sind, daß die Sendediode der Infrarotlichtschranke mit kurzen Impulsen erregt wird und daß der Empfangstransistor eine Ansprechverzögerung aufweist.

Die Erfindung unterscheidet sich insofern vom Stand der Technik, als die Infratolichtschranke auch bei verschmutztem Wasser wirksam ist. Lichtleiter ermöglichen eine durckdichte Durchführung; ein Innendruck von 2 MPa ist ohne weiteres zulässig. Die Erregung der Sendediode mit kurzen Impulsen und die verzögerte Charakteristik des Empfangstransistors ermöglichen einen energiesparenden Betrieb, so daß innnerhalb der geforderten Betriebszeit von 6 Jahren, die Energie einer üblichen Batterie nicht erschöpft wird.

Eine geringer Energieverbrauch wird durch eine Taktung der Messung dadurch erreicht, daß die Sendeimpulse eine Impulsdauer von 2 bis 20 µs und eine Impulsfrequenz von 100 bis 500 Hz haben.

Ein besonders geringer Energieverbrauch wird dadurch erreicht, daß die Sendeimpulse eine Impulsdauer von etwa 3 µs und eine Impulsfrequenz von etwa 128 Hz haben.

Eine Erfassung der Drehrichtung wird dadurch sichergestellt, daß mehrere Reflexionsbeläge auf einer Stirnfläche des Zapfens des Flügelrades angeordnet sind.

Ein Ausführungsbeispiel wird anhand der Zeichnungen erläutert, in denen darstellen:

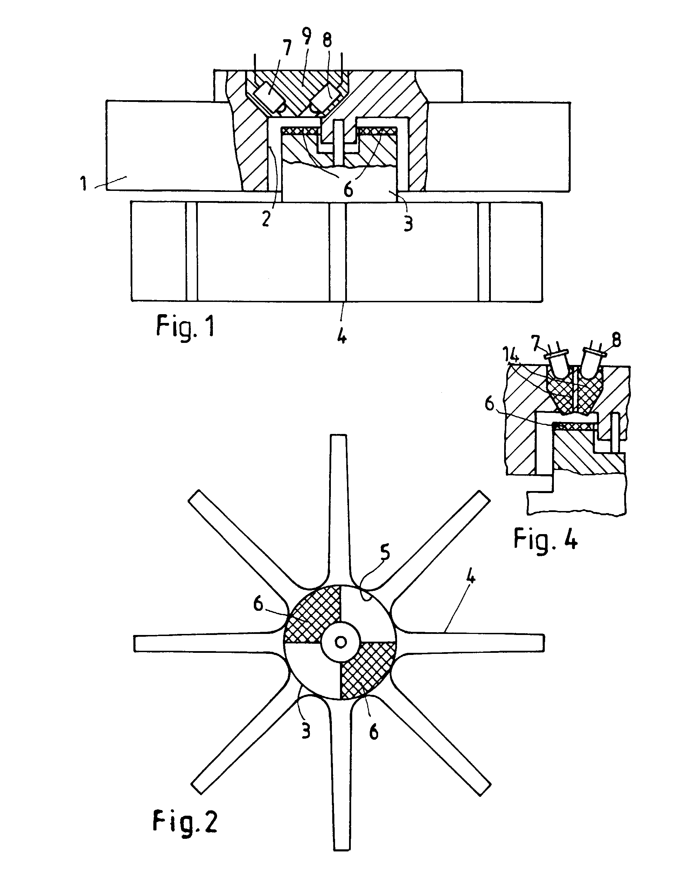

Fig. 1 einen Schnitt durch den Wassermengenzähler,
Fig. 2 eine Draufsicht auf das Flügelrad,
Fig. 3 eine Gesamtansicht mit Schaltbild,
Fig. 4 ein abgewandeltes Ausführungsbeispiel und
Fig. 5 ein Impulsdiagramm der Lichtimpulse.

Der Wassermengenzähler weist eine Druckkammer auf, von der eine Wandung 1 dargestellt ist. In einer Aufnahme 2 der Wandung 1 ist ein Zapfen 3 eines Flügelrades 4 gelagert. Die weiteren Wandungen und die Anschlußstutzen der Druckkammer sind nicht dargestellt. Der Wassermengenzähler mit dem Flügelrad 4 entspricht der üblichen Bauart.

Auf der Stirnfläche 5 des Zapfens 3 befinden sich mehrere Reflexionsbeläge 6 in form von Sektorabschnitten. Auf die Kreisbahn der Reflexionsbeläge 6 ist eine Infrarotlichtschranke mit einer Sendediode 7 und einem Empfangstransistor 8 ausgerichtet. Die Sendediode 7 und der Empfangstransistor 8 sind in einem Einsatzkörper 9 aufgenommen. Der Einsatzkörper 9 ist druckdicht in der Wandung 1 der Druckkammer eingebaut. Die Reflexionsbeläge können auch an anderer Stelle des Flügelrades angeordnet sein, etwa auf den Spitzen der Flügel.

In Umfangsrichtung versetzt kann man eine weitere Infrarotlichtschranke vorsehen. Dadurch ist eine Erkennung der Drehrichtung möglich. Außerdem führen Vibrationen im hydraulischen System nicht zu Fehlmessungen.

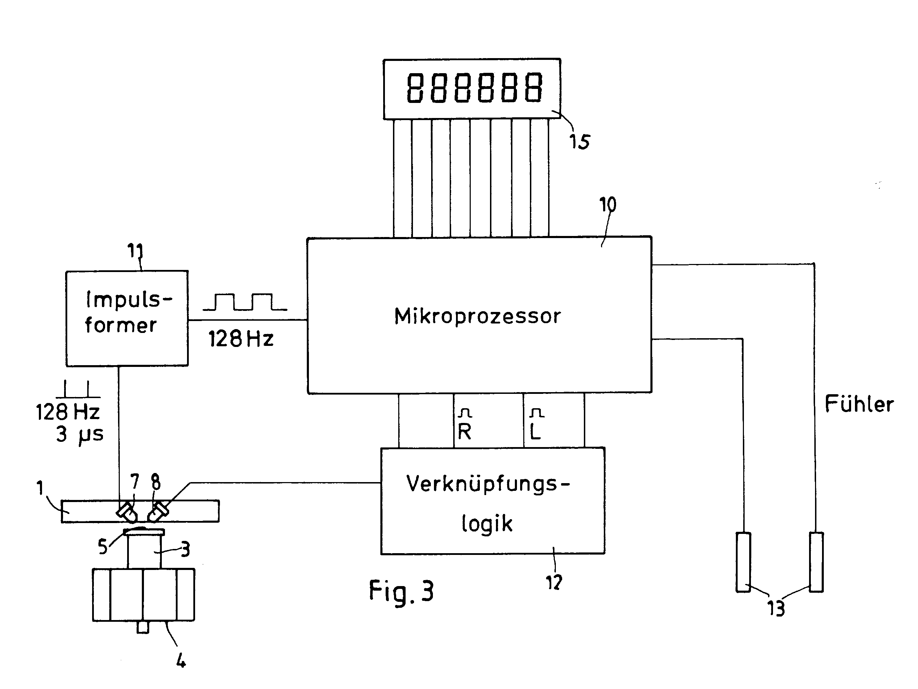

Fig. 3 zeigt eine Gesamtansicht eines Wärmemengenmessers mit dem Wassermengenzähler und der Auswerteschaltung. Die optische Sendediode 7 des Wassermengenzählers wird mit Impulsen von 3 µs Impulsbreite und einer Frequenz von 128 Hz erregt. Diese Impulse werden in dem Mikroprozessor 10 erzeugt und in einem Impulsformer 11 geformt. Der Impulsbetrieb dient zur Schonung der elektrischen Batterie, so daß ein langer Batteriebetrieb über mehr als sechs Jahre erreicht werden kann.

Der Empfangstransistor 8 ist sehr lichtempfindlich, hat jedoch eine niedrige Arbeitsfrequenz. Der schmale, energiereiche Sendeimpuls schaltet den Empfangstransistor verzögert durch. Dieser Einschaltzustand bleibt dann länger erhalten.

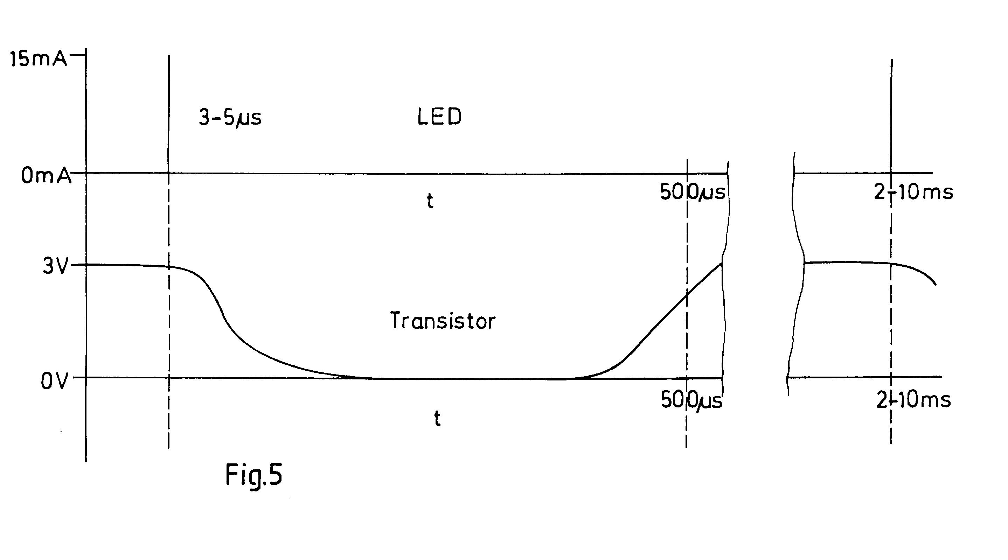

Fig. 5 zeigt in Einzelheiten ein Impulsdiagramm der Lichtschrankenimpulse. Die Sendediode LED wird mit schmalen Impulsen einer Impulsbreite von 2 - 20 µs, vorzugsweise 3 - 5 µs und einem Impulsabstand von 2 - 10 ms, entsprechend 500 - 100 Hz erregt. Der Phototransistor zegit ein verzögertes Ansprechen und Durchschalten in den Leitungszustand und eine Impulsverlängerung bis zu 500 ms. Dadurch wird eine sichere Signalverarbeitung ermöglicht.

In einer Verknüpfungslogik 12 werden die Signale der mehreren Lichtschranken verknüpft, um die Drehrichtung zu erkennen und um Störungen auszuschließen. Temperaturfühler 13 ermöglichen eine Wärmemengenmessung durch den Mikroprozessor 10. Eine Anzeige 15 vervollständigt die Anordnung.

Bei dem abgewandelten Ausführungsbeispiel nach Fig. 4 umfaßt der Einsatzkörper Lichtleiter 14. Die Sendediode 7 und der Empfangstransistor 8 befinden sich im Außenraum. Sie sind somit jederzeit zugänglich.

## Patentansprüche

1. Wassermengenzähler mit einem in einer Druckkammer drehbar gelagerten Flügelrad, mit einer Abtastvorrichtung für das Flügelrad, das mindestens einen Reflexionsbelag aufweist, und mit einer auf die Bahn des Reflexionsbelages ausgerichteten Reflexionslichtschranke, dadurch gekennzeichnet, daß die Reflexionslichtschranke als Infrarotlichtschranke ausgebildet ist, daß Lichtleiter (14) der Reflexionslichtschranke druckdicht durch die Wandung der Druckkammer hindurchgeführt sind, daß die Sendediode der Infrarotlichtschranke mit kurzen Impulsen erregt wird und daß der Empfangstransistor eine Ansprechverzögerung aufweist.

2. Wassermengenzähler nach Anspruch 1, dadurch gekennzeichnet, daß die Sendeimpulse eine Impulsdauer von 2 bis 20 µs und eine Impulsfrequenz von 100 bis 500 Hz haben.

3. Wassermengenzähler nach Anspruch 2, dadurch gekennzeichnet, daß die Sendeimpulse eine Impulsdauer von etwa 3 µs und eine Impulsfrequenz von etwa 128 Hz haben.

4. Wassermengenzähler nach einem der Ansprüche 1 bis 3, dadurch gekennzeichnet, daß mehrere Reflexionsbeläge (6) auf einer Stirnfläche (5) des Zapfens (5) des Flügelrades (4) angeordnet sind.

## Claims

1. A water meter having an impeller which is rotatably mounted in a pressure chamber, having a scanning device for the impeller, which impeller has at least one reflective coating, and having a reflective light barrier aligned with the path of the reflective coating, characterized in that the reflective light barrier is constructed as an infrared light barrier, in that waveguides (14) of the reflective light barrier are guided in pressure-tight manner through the wall of the pressure chamber, in that the transmission diode of the infrared light barrier is excited by short pulses, and in that the receiving transistor has a response delay.

2. A water meter according to Claim 1, characterized in that the transmission pulses have a pulse duration of 2 to 20 µs and a pulse frequency of 100 to 500 Hz.

3. A water meter according to Claim 2, characterized in that the transmission pulses have a pulse duration of approximately 3 µs and a pulse frequency of approximately 128 Hz.

4. A water meter according to one of Claims 1 to 3, characterized in that a plurality of reflective coatings (6) are arranged on an end face (5) of the journal (5) of the impeller (4).

## Revendications

1. Compteur d'eau avec une roue à ailettes placée de manière rotative dans une chambre sous pression, avec un dispositif palpeur pour la roue à ailettes qui présente au moins un revêtement réfléchissant, et avec une barrière lumineuse réfléchissante dirigée vers la trajectoire du revêtement réfléchissant, caractérisé en ce que la barrière lumineuse réfléchissante est conformée comme une barrière lumineuse à infrarouge, en ce que les guides de lumière (14) de la barrière lumineuse réfléchissante pénètrent de manière étanche à travers la paroi de la chambre sous pression, en ce que la diode émettrice de la barrière lumineuse à infrarouge est excitée par de brèves impulsions et en ce que le transistor récepteur présente une temporisation de réponse.

2. Compteur d'eau selon la revendication 1, caractérisé en ce que les impulsions émises ont une durée de 2 à 20 µs et une fréquence de 100 à 500 Hz.

3. Compteur d'eau selon la revendication 2, caractérisé en ce que les impulsions émises ont une durée d'environ 3 µs et une fréquence d'environ 128 Hz.

4. Compteur d'eau selon une des revendications 1 à 3, caractérisé en ce que plusieurs revêtements réfléchissants (6) sont disposés sur une surface frontale (5) du tourillon (5) de la roue à ailettes (4).
